(19) Europäisches Patentamt
European Patent Office
Office européen des brevets

(11) **EP 4 667 431 A1**

(12) **EUROPEAN PATENT APPLICATION**

(43) Date of publication:
**24.12.2025 Bulletin 2025/52**

(21) Application number: 24183698.0

(22) Date of filing: **21.06.2024**

(51) International Patent Classification (IPC):
***C03C 23/00*** *(2006.01)*    ***G02C 7/02*** *(2006.01)*

(52) Cooperative Patent Classification (CPC):
**C03C 23/0025; B29D 11/00009; B29D 11/00326; B29D 11/0048; G02C 7/021**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Carl Zeiss Vision International GmbH 73430 Aalen (DE)**

(72) Inventors:
- **LAUNAY, Florian**
  **Aalen (DE)**
- **STROHMAIER, Jens**
  **Aalen (DE)**

(74) Representative: **Tautz & Schuhmacher**
**Nibelungenstraße 84**
**80639 München (DE)**

(54) **METHODS FOR APPLYING A MARKING STRUCTURE TO A GLASS BODY AND FOR MANUFACTURING A SPECTACLE LENS BLANK**

(57)    Provided is a method (100) for applying a marking structure (10) to a glass body (12). The method (100) comprises applying (102) a laser radiation (12) to the glass body (12) at an intended position (16) of the marking structure (10). The laser radiation (14) is applied such as to cause a local, nondisruptive material displacement (18) in the glass body (12) at the intended position (16) of the marking structure (10).

**Fig. 1B**

EP 4 667 431 A1

**Description**

Provided is a method for applying a marking structure to a glass body, a method for applying a marking element to a glass body, and a method for manufacturing a spectacle lens blank or a semi-finished spectacle lens or a finished spectacle lens. The disclosure is, thus, related to the manufacturing of optical elements.

Spectacle lenses are often made by mechanical machining spectacle lens blanks, which are also known as "pucks". Such spectacle lens blanks are typically manufactured by casting the spectacle lens blanks in respective casting molds. The casting process may comprise providing a suitable casting mold providing a void for casting, filling the void of the casting mold with a casting material, curing the casting material inside the casting mold, and mechanically opening and removing the casting mold from the casted spectacle lens blank.

In some cases it may be desirable to provide symbols on the spectacle lens, such as one or more optical marks, which may serve for identifying and/or specifying the spectacle lens blank. The optical marks are often applied to the spectacle lens blank by providing a respective marking structure to the inside of the casting mold prior to casting the spectacle lens blank using said casting mold. For instance, the one or more optical marks applied to the spectacle lens blank may comprise or consist of a data matrix code for identifying the product and/or for creating a link between the casted spectacle lens blank and the used casting mold.

A commonly used material for casting spectacle lens blanks is CR 39, which is a common term for a material with the chemical expression allyl diglycol carbonate (ADC) in its monomeric state and Poly (allyl diglycol carbonate) ((P)ADC) in its polymeric state. When using CR 39 as casting material, a process for manufacturing a spectacle lens blank or a semi-finished spectacle lens product by casting would comprise the steps of (i) providing a casting mold without marking structure, (ii) applying a marking structure to the casting mold, and (iii) casting the spectacle lens blank using the casting mold having the marking structure applied thereto.

The marking structures applied to the casting mold are to be made on the casting mold in such a manner that the marking structure generates an optical mark transferred to the spectacle lens blank during the casting process. The optical mark is typically intended to be visible to respective machines, such as code readers, and to the human eye. Moreover, applying the marking structure to the casting mold is aiming to avoid any damages or impairments to the casting mold and the casted spectacle lens blanks and last for a lifetime of the casting mold, which is typically in the range of up to 1.300 cycles.

Conventionally, two different techniques for applying a marking structure to the casting mold are available, which are (i) acid etching and (ii) laser engraving resulting in material removal of the casting mold.

Acid etching for applying the marking structure to the casting mold uses an acid to etch a pre-coated inner surface of the casting mold to the effect that the exposed area corresponding to the intended marking structure is etched. However, acid etching comes with various disadvantages, which include (i) the process being complicated and requiring the operator to carry out a large number of different steps, (ii) the process requiring resin and acid, which may both be undesirable from an ecological point of view, (iii) the process requiring the operator to wear protective gear against the acid, and (iv) the resulting marking structure being prone to mold sticking, which may result in the casting form and/or the cast spectacle lens blank partly disintegrating when removing the casting mold from the spectacle lens blank.

On the other hand, using laser engraving resulting in material removal from the casting mold is based on using laser irradiation for sublimating a part of the material. The sublimated material leaves behind one or more recesses at the inner surface of the casting mold forming the marking structure. Laser engraving resulting in material removal comes with various disadvantages, which include (i) the formation of micro cracks in the casting mold, typically at the edge of the engraving area, which tend to expand when removing the casting mold from the cast spectacle lens blank often resulting in the casting mold breaking in an early stage of its intended life time, (ii) monomeric casting material remaining on the casting mold after removing the casting mold from the spectacle lens blank, and (iii) the resulting marking structure being prone to mold sticking, which may result in the casting form and/or the cast spectacle lens blank partly disintegrating when removing the casting mold from the spectacle lens blank.

EP 2 184 127 B1 describes a method for applying a permanent marking to an optical element, wherein laser radiation having a wavelength between 1,1 $\mu$m and 9,2 $\mu$m is used and the material of the optical element exhibits an absorption with a transmission between 60% and 98% of at the wavelength of the laser radiation.

WO 96/32221 A1 describes a method for laser marking a glass object, wherein a layer of a material is applied to the surface of a glass object with a view to etching the glass object, and a laser beam is caused to interfere with said material. The material making up said layer is selected for its ability to react with the glass and e.g. be diffused therein. The method is particularly suitable for marking molds for ophthalmic lenses.

WO 2015/040338 A1 describes a device and a process for marking an ophthalmic lens with a pulsed laser emitting laser radiation having a wavelength between 200 nm and 300 nm, a pulse duration between 0,1 ns and 5 ns and an energy per pulse between 5 $\mu$J to 100 $\mu$J.

EP 0 601 857 A1 describes a method of marking a surface of an ophthalmic lens using a KrF laser.

S. Logunov et al. describe a process of forming bumps on the surface of transparent glasses such as display glasses with moderate thermal expansion ~3.2 $\times$ $10^{-6}$ $K^{-1}$ and high coefficient of thermal expansion (CTE) glasses, e.g. soda-lime glasses with CTE ~9 $\times$ $10^{-6}$ $K^{-1}$ using high-power ultra-violet (UV) lasers at a wavelength where glass is transparent. The effect is characterized with optical dynamic measurements. The process relies on increased glass absorption from color-center generation and leads to glass swelling with the formation of bumps. The bump height may constitute more than 10% of the thickness of the glass sample. The required exposure time is relatively short, ~1 s, and depends on the glass properties, laser power, its repetition rate, and focusing conditions. A brief review of the potential applications for these bumps is provided.

A method for laser texturing of doped borosilicate glasses is described in the following scientific publication: A. Streltsov et al.: "Laser texturing of doped borosilicate glasses" Proc. SPIE 7584, Laser Applications in Microelectronic and Optoelectronic Manufacturing XV, 75840S (17 February 2010).

A. Streltsov et al. describe a novel process of laser-assisted fabrication of surface structures on doped oxide glasses with heights reaching 10 - 13% of the glass thickness. This effect manifests itself as a swelling of the irradiated portion of the glass, and occurs in a wide range of glass compositions. The extent of such swelling depends on the glass base composition. Doping with Fe, Ti, Co, Ce, and other transition metals allows for adjusting the absorption of the glass and maximizing the feature size. In the case of bumps grown on borosilicate glasses, reversible glass swelling is observed, and the bump height increases or decreases depending on whether the consecutive laser pulse has higher or lower energy compared to the previous one. Density, refractive index, fictive temperature, and phase separation dynamics are explored to understand the hypothetical mechanism, which includes laser heating of glass, glass melting, and directional flow.

These conventional techniques suffer from various disadvantages.

Using carbon dioxide lasers for conventional techniques of engraving marks into a glass body is based on applying extreme heat and material cracking. This typically leads to a limited engraving quality at the edges often exhibiting heat-affected zones and/or micro-cracks.

Conventional engraving techniques using an Excimer laser are based on cold ablation and vaporization, which results in a material removal often resulting in sharp edges and filigree structures in the ablated area. Moreover, Excimer lasers use rare gas and are therefore often expensive in their use and maintenance.

It is, therefore, desirable to provide a method for applying a marking structure to a glass body enriching the prior art. Moreover, in view of EP 2 184 127 B1 as closest prior art the objective technical problem of the claimed subject-matter may relate to providing a method for applying a marking structure to a glass body having a smooth surface.

This problem is solved by the methods having the features of the respective independent claims. Optional embodiments are provided in the dependent claims and the description.

A method for applying a marking structure to a glass body is provided. The method comprises applying laser radiation to the glass body at an intended position of the marking structure, wherein the laser radiation is applied such as to cause a local, nondisruptive material displacement in the glass body at the intended position of the marking structure.

Moreover, a method for applying a marking element to a glass body is provided. The method comprises applying multiple marking structures using a method according to the disclosure such that the multiple marking structures form at least a part of the marking element.

Furthermore, a method for manufacturing a spectacle lens blank, a semi-finished spectacle lens or a finished spectacle lens is provided. The method comprises applying one or more marking structures to the spectacle lens blank, the semi-finished spectacle lens, or the finished spectacle lens, respectively, using a method according to the disclosure.

Furthermore, a method for manufacturing a spectacle lens blank is provided. The method comprises (i) providing a casting mold, (ii) applying a marking structure at an inner surface of at least one part of the casting mold using a method according to the disclosure, and (iii) casting the spectacle lens blank using the casting mold.

Moreover, the invention is directed to a glass body comprising a marking structure on at least a part of the glass body using the described method.

A glass body may be a work piece partially or entirely made of glass. The glass body may be partially or entirely made of an inorganic glass. The glass body may form a casting mold for casting spectacle lens blanks or a part of a casting mold. A surface of the glass body, to which a marking structure is applied, may form an inner surface of a casting mold. Alternatively, the glass body may be at least part of or may comprise one of the following elements: a spectacle lens blank, a semi-finished spectacle lens, a finished spectacle lens, a spectacle lens, and an optical element. The glass body may be made of mineral glass. Typical mineral glasses for the glass body are also known as D 0991 (CH-W 0991) and S3. The material for the spectacle lens blank to be casted may comprise one or more of the following materials: Poly (allyl diglycol carbonate) ((P)ADC), Polythiourethan and Polyepisulfid. Thereby, Poly (allyl diglycol carbonate) ((P)ADC) may has an average refractive index of 1,500, Polythiourethan may has an average refractive index of 1,598 or 1,664 or 1,666 and Polyepisulfid may has an average refractive index of 1,738. These materials are also known as CR 39, MR 7, MR 8, MR 10, and MR 174.

A marking structure may be a structure applied to the casting mold suitable to transfer a predefined structure from the casting mold to a spectacle lens blank casted using said casting mold. The marking structure may be applied to an inner surface of the casting mold being in direct contact with the casting material when casting the spectacle lens blank. The marking structure may correspond to the predefined optical mark to be applied to the spectacle lens blank during the casting process or to a negative structure of the predefined optical mark. "Negative structure" in the context of the disclosure means that the optical mark may represent a complementary or inverted structure of the marking structure.

A local, nondisruptive material displacement in the glass body is an alteration of the glass body or a surface of the glass body originating in a local rearrangement of the material of the glass body, essentially without material ablation and essentially without laser-induced swelling of the material of the glass body. "Essentially without material ablation" means that the marking structure formed primarily by the local, nondisruptive material displacement in the glass body, wherein there is no contribution of laser-induced material ablation or a possible contribution of laser-induced material ablation to the formed marking structure is negligible. "Essentially without laser-induced swelling" means that the marking structure formed primarily by the local, nondisruptive material displacement in the glass body, wherein there is no contribution of laser-induced swelling of the material of the glass body or a possible contribution of laser-induced swelling of the material of the glass body to the formed marking structure is negligible. In other words, the local, nondisruptive material displacement in the glass body may relate to a process where the laser radiation applied to the intended position of the marking structure results in a local deformation of the glass body and optionally of the surface of the glass body, wherein essentially no material is removed from the glass body and essentially no local expansion of the material of the glass body occurs. Local, nondisruptive material displacement in the glass body may be caused by heat provided by the laser radiation causing the glass body to locally reach a softening temperature and, thus, to melt. The molten glass may then flow and move away from the laser's focal point due to the pressure provided by the laser radiation, in particular in parts of the laser radiation having a higher intensity than the surrounding, such as the focus. After finishing applying the laser radiation, the glass may cool down and solidify, fixing the applied marking structure on the surface of the glass body.

A spectacle lens blank may relate to a piece of optical material manufactured in a casting process. The spectacle lens blank may optionally have one optically finished surface for the making of a lens, as specified in section 3.8.1 of ISO 13666:2019(E). The spectacle lens blank may be a blank, a semi-finished blank, a lens blank, a semi-finished lens and/or a semi-finished lens blank according to section 3.8.1 of ISO 13666:2019(E). Moreover, the spectacle lens blank may be a rough blank corresponding to a piece of optical material according to section 3.3.1 of ISO 13666:2019(E) with neither side having finished surfaces. The optical material may be a transparent material capable of being manufactured into optical components, as specified in section 3.3.1 of ISO 13666:2019(E).

A spectacle lens may satisfy the specifications of section 3.5.2 of ISO 13666:2019(E)). In particular, a spectacle lens may be an ophthalmic lens according to section 3.5.1 of ISO 13666:2019(E) worn in front of, but not in contact with, the eyeball.

Manufacturing the spectacle lens may consist of or comprise casting the spectacle lens using a suitable casting mold. The casting mold may be a casting form providing a void with suitable dimensions to create the predefined spectacle lens blank when filled with casting material and when at least partially curing the casting material within the casting mold. The inner surface may be referred to as a casting surface.

An inner surface of the casting mold is a surface of the casting mold being in contact with the casting material during the casting process. Accordingly, the shape of an inner surface of the casting mold determines the shape of an outer surface of the cast spectacle lens blank. The inner surface of the casting mold may be referred to as a casting surface.

The casting mold may be usable multiple times, i.e. for sequentially casting multiple spectacle lens blanks using the same casting mold. The casting mold may be adapted to be usable at least 100 times, optionally at least several hundred of times and optionally up to or at least 1300 times before the casting mold has to be replaced.

The disclosure provides the advantage that applying a marking structure based on local, nondisruptive material displacement in the glass body allows applying the marking structure without damaging the integrity of the glass, i.e., without generating cracks, craters and other filigree damages of the glass body. Accordingly, the disclosure provides the advantage that in contrast to engravings obtained by conventional techniques, marking structures having smooth edges may be achieved. Carefully managing an energy delivery to the glass body at the intended position of the marking structure by appropriately adjusting the laser radiation and, hence, a local heat distribution in the glass body, may provide a suitable controlled material displacement without causing cracks in the glass body.

Moreover, the disclosure provides the advantage that when using the method for applying a marking structure to a glass body used as a casting mold for casting spectacle lens blanks, the smooth edges of the marking structure are less prone to chipping and/or flaking over time and reduce a risk of casting material getting stuck in and/or at the marking structure in the casting process, hence reducing a risk for damaging a casted spectacle lens blank when removing the casting mold.

Moreover, the disclosure may provide the advantages that the marking structures may be used for providing distinctive marking elements to spectacle lens products by means of respective marking elements applied to casting molds, which are difficult to replicate and may therefore be suitable for distinguishing the spectacle lenses from counterfeits.

When casting a spectacle lens blank, a pre-mixed, reactive monomer mixture may be filled into casting molds, wherein at least one of the casting molds may be formed by a glass body carrying one or more marking structures according to the disclosure. The casting mold may comprise two mineral glass pieces and rubber sealings. The front and backside of these mineral glass pieces may contain information in form of permanent markings provided by marking structures according to the disclosure. The markings exposed to the to-be-cured monomer mixture may be transferred to the cured casted spectacle lens blank. The entirety of transferred and non-transferred marking structures may provide a marking element allowing for the tracking of the casting mold assembly parts and therefrom derived lens blanks.

A mechanical stress applied to the glass body, i.e. the casting mold, upon pull-out of the casted spectacle lens blank may be proportional to the adhesion between both elements. The conventionally used material CR 39 shows a high adhesion towards the casting molds, and conventionally observed defects like mold pull-outs typically originate in pre-existing defects, e.g., caused by markings applied by laser-based material ablation, which may be avoided when applying the marks using a method according to the disclosure.

Moreover, the disclosure provides the advantages that it may be carried out using conventional laser sources, such as a Carbon dioxide laser source and/or an Excimer laser source, but does not necessarily require special hardware for carrying out the method. Instead, the advantages may be achieved by simply adjusting the parameters of the laser radiation applied to the glass body when applying the optical mark.

Moreover, the disclosure may provide the advantage that no annealing process following the process of applying the laser radiation may be needed. This may facilitate the marking process and, hence, reduce the manufacturing effort and costs.

In addition, the disclosure provides the advantage that it may allow creating precise and smooth structures in the glass body, such as lenslets.

Moreover, the disclosure may provide the advantage that marking elements may be generated by applying multiple marking structures arranged in a defined relative position with respect to each other, wherein a high spatial resolution may be achievable. The resolution may be limited only by a focal size of the laser radiation, which may be limited by the diffraction limit governed by the wavelength of the laser radiation.

The laser radiation may be applied such that an average intensity of the laser radiation applied to the glass body at the intended position of the marking structure is in a range from $2 \cdot 10^8 \frac{W}{m^2}$ to $1 \cdot 10^9 \frac{W}{m^2}$. This may allow achieving a suitable energy delivery and, thus, heat distribution at the intended position of the marking structure at a surface of the glass body to generate the marking structure by local, nondisruptive material displacement in the glass body. The intensity working best may vary with the material properties of the glass body and may be determined by carrying out experiments using different intensities.

A peak power of the laser radiation applied to the glass body at the intended position of the marking structure may be $2 \cdot 10^9 \frac{W}{m^2}$ or less. This may prevent an occurrence of material ablation and/or of cracks and/or craters generated by the applied laser radiation.

The laser radiation may be applied in pulsed manner, wherein a pulse duration of each applied pulsed laser radiation is 800 μs or less and optionally 500 μs or less. This may allow forming the marking structures in a short time and applying multiple marking structures possibly forming a larger marking element in a time efficient process. The pulsed nature of the laser radiation may be achieved by using a laser source, such as a laser oscillator and/or laser amplifier emitting pulsed laser radiation as such. Alternatively, the pulsed nature may be achieved by using a continuous wave laser source and using external means for achieving pulsed operation, such as a mechanical copper wheel, a mechanical shutter and/or an electro-optical modulator. The pulse duration of the provided laser radiation may, thus, be independent of spectral characteristics of the laser radiation in the frequency domain and a possible compression of the laser pulses in the time domain.

The method may comprise multiple repetitions of applying the laser radiation to the glass body at the intended position of the marking structure. This may allow precisely adjusting the energy intake at the intended position of the marking structure at the glass body and may allow precise controlling of a heat distribution during the formation of the marking structure. Optionally, the method may allow adjusting the time periods of the repetitions of applying the laser radiation and/or adjusting idle periods between the repetitions allowing the intended position of the glass body to cool down.

In one or more first repetitions the laser radiation may be applied with an average intensity in a range from $1 \cdot 10^8 \frac{W}{m^2}$ to $3,4 \cdot 10^8 \frac{W}{m^2}$ or less. This may allow locally heating the glass body at the intended position of the optical mark in order to prepare the glass body at the intended position of the structural for the formation of marking structure. Optionally, three to five first repetitions may be applied.

In one or more second repetitions after the first repetitions the laser radiation may be applied with an average intensity in a range from $3{,}5 \cdot 10^8 \frac{W}{m^2}$ to $5{,}5 \cdot 10^8 \frac{W}{m^2}$ or less. This may allow creating the marking structure. Optionally, one second repetition may be applied.

The method may further comprise one or more third repetitions in which the laser is applied with an average intensity in a range from $2{,}8 \cdot 10^8 \frac{W}{m^2}$ to $4 \cdot 10^8 \frac{W}{m^2}$ or less. This may allow controlling a process of the locally heated glass body cooling off which may result in an improved surface profile.

Applying a marking structure to a glass body based on a local, nondisruptive material displacement in the glass body may create a modification of the surface profile of the glass body at the intended position of the marking structure, which may comprise a toroidal indentation in the glass body surrounded by a wall-like protrusion. In the center of the toroidal recess a central protrusion may be formed representing the "hole" in the middle of the toroidal recess. In other words, the structural modification may have an appearance similar to a "donut-shape". The resulting shape of the structural modification achieved based on the local, nondisruptive material displacement offers the advantage that a surface profile of the structural modification is smooth, in particular when compared to conventional techniques based on material ablation. In particular, microscopic cracks and/or crates may be absent in the structural modification, which helps preventing undesired damages in particular when using the glass body as a casting mold for casting optical elements, such as spectacle lens blanks. Said toroidal recess may be achieved when focusing the laser radiation on the surface of the glass body at the intended position of the marking structure.

Alternatively, the laser radiation may be applied such that the resulting marking structure has the shape of a protrusion, which may have the appearance of a "bump" on the surface of the glass body at the position of the marking structure. This may be achieved by applying the laser radiation such that the surface of the glass body at which the marking structure shall be formed is outside the laser focus, i.e. before or after the focal plane in the propagation direction of the laser radiation. This may reduce the average intensity and the peak intensity of the impinging laser radiation at the surface of the glass body and, thus, result in a formation of the marking structure.

The applied laser radiation may have spectral components in at least one of the infrared spectral range and the ultraviolet spectral range. The infrared laser radiation may be provided by a $CO_2$ laser source emitting laser radiation with a central wavelength between 10 $\mu$m and 11 $\mu$m. Using laser radiation in the infrared spectral range, in a wavelength range between 10 $\mu$m and 11 $\mu$m, may have the advantage that the absorption spectrum of many glass materials does not significantly change with small variations of the wavelength. This may enhance a reliability and/or stability of the process for forming the marking structures as an interaction of the laser radiation with the material of the bulk glass may be unaffected or affected only in an insignificant manner with slight variations of the laser radiation and/or the material of the glass body. A $CO_2$ laser source having an emission wavelength of about 10,6 $\mu$m may be used. The $CO_2$ laser source may be chosen to have a maximum power of the emitted laser radiation of about 20 W, wherein the emitted laser power may be attenuated to provide the laser radiation with the desired intensity at the intended position of the marking structure to be formed by the laser radiation.

The ultraviolet laser radiation may be provided by an Excimer laser source. Optionally or additionally, an infrared laser source and an ultraviolet laser source may be used. Using a combination of ultraviolet laser radiation and infrared laser radiation may allow for ablating a small dot-like structure by the applied ultraviolet laser radiation and melting and/or smoothing at least a part of the ablated structure by the applied infrared radiation. This may enable achieving the desired structure having a smooth surface profile and/or edge profile. The infrared laser source may be or include a $CO_2$ laser source.

The application of the laser radiation may be further adjusted by controlling a repetition rate of applying repetitions to the intended position of the marking structure and/or controlling a speed with which consecutive marking structures are applied and/or a position of the focal plane of the laser radiation relative to the surface off the glass body at which the marking structure is to be applied. Different repetitions may be applied with different energies of the applied laser radiation.

The applied laser radiation may be controlled such as to first heat the glass body locally until the glass body reaches a softening point or melting point locally, and then applying a repetition with a larger amount of energy and/or a higher intensity. This may allow reducing a risk of the glass body cracking, which may be higher when applying the repetition with larger energy and/or higher intensity prior to heating the glass body to its softening point, i.e. melting point. This process may allow the application of marking structures to the glass body at a higher energy without damaging the structure and allow applying deeper structures than other processes. This cycle of repetitions may be repeated multiple times in order to achieve the desired structural depth of the marking structures.

It is understood by a person skilled in the art that the above-described features and the features in the following description and figures are not only disclosed in the explicitly disclosed embodiments and combinations, but that also other technically feasible combinations as well as the isolated features are comprised by the disclosure. In the following, several optional embodiments and specific examples are described with reference to the figures for illustrating the disclosure without limiting the disclosure to the described embodiments.

Optional embodiments of the disclosure will be illustrated in the following with reference to the drawings. The Figures show:

Figures 1A and 1B    a method according to an optional embodiment for applying a marking structure to a glass body;

Figure2    a method according to an optional embodiment for manufacturing a spectacle lens blank;

Figure 3    a method according to an optional embodiment for manufacturing a spectacle lens blank;

Figures 4A to 4F    a marking structure according to an optional embodiment applied to a glass body based on local, nondisruptive material displacement in the glass body;

Figure 5    a marking element according to an optional embodiment formed of multiple marking structures;

Figures 6A to 6C    a marking structure according to a further optional embodiment; and

Figures 7A and 7B    a method according to an optional embodiment for manufacturing a spectacle lens blank.

In the drawings the same reference signs are used for corresponding or similar features in different drawings.

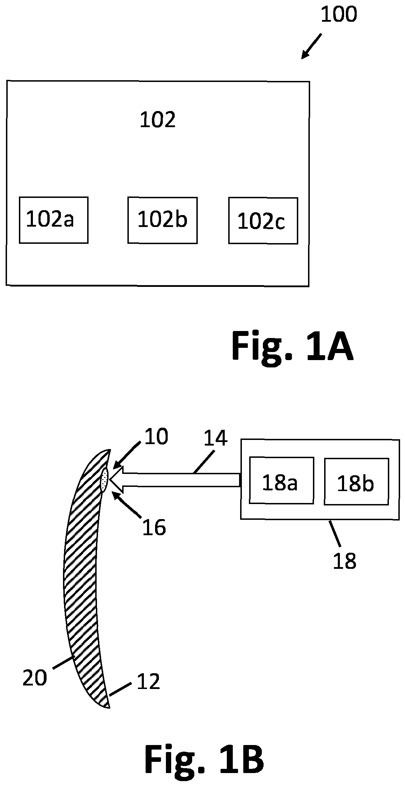

Figures 1A and 1B illustrate a method 100 for applying a marking structure 10 to a glass body 12. The method 100 comprises a step 102 of applying laser radiation 14 to the glass body 12 at an intended position 16 of the marking structure 10. The laser radiation 14 is applied such as to cause a local, nondisruptive material displacement 18 forming the marking structure 10 in the glass body 12 at the intended position 16 of the marking structure10.
The laser radiation 14 may be applied such that an average intensity of the laser radiation 14 applied to the glass body 12 at the intended position 16 of the marking structure 10 is in a range from $2 \cdot 10^8 \frac{W}{m^2}$ to $1 \cdot 10^9 \frac{W}{m^2}$.
A peak power of the laser radiation 14 applied to the glass body 12 at the intended position 16 of the marking structure 10 may be $2 \cdot 10^9 \frac{W}{m^2}$ or less.
The laser radiation 14 may be applied in pulsed manner, wherein a pulse duration of each applied pulsed laser radiation 14 may be 800 μs or less and optionally 500 μs or less.
The method may comprise one or more repetitions of applying 102 the laser radiation 14 to the glass body 12 at the intended position 16 of the marking structure 10.
In one or more first repetitions 102a the laser radiation 14 may be applied with an average intensity in a range from $1 \cdot 10^8 \frac{W}{m^2}$ to $3,4 \cdot 10^8 \frac{W}{m^2}$ or less. In one or more second repetitions 102b after the first repetitions 102a the laser radiation 14 may be applied with an average intensity in a range from $3,5 \cdot 10^8 \frac{W}{m^2}$ to $5,5 \cdot 10^8 \frac{W}{m^2}$ or less.
The method may further comprise one or more third repetitions 102c in which the laser radiation 14 may be applied with an average intensity in a range from $2,8 \cdot 10^8 \frac{W}{m^2}$ to $4 \cdot 10^8 \frac{W}{m^2}$ or less.
The applied laser radiation 14 may have spectral components in at least one of the infrared spectral range and the ultraviolet spectral range. The laser radiation 14 may be provided by a laser source 18. The infrared laser radiation may be provided by a $CO_2$ laser source 18a. Alternatively or additionally, the ultraviolet laser radiation may be provided by an Excimer laser source 18b.
The glass body 12 may be at least part of or comprise one of the following elements: a spectacle lens blank 20, a semi-finished spectacle lens, a finished spectacle lens, a spectacle lens, a casting mold for casting a spectacle lens blank, and an optical element.
The method 100 may comprise applying 104 multiple marking structures 10 according to method step 102 such that the multiple marking structures 10 form at least a part of the marking element 20.

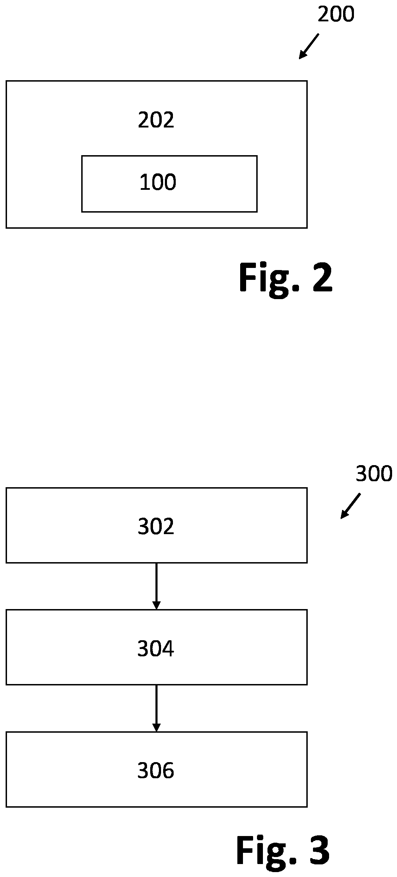

Figure 2 schematically illustrates a method 200 according to an optional embodiment for manufacturing a spectacle lens blank, a semi-finished spectacle lens or a finished spectacle lens. The method 200 may comprise applying 202 one or more marking structures 10 to the spectacle lens blank, the semi-finished spectacle lens, or the finished spectacle lens, respectively, using method 100 detailed with reference to Figures 1A and 1B.
Figure 3 illustrates a method 300 according to an optional embodiment for manufacturing a spectacle lens blank.
The method 300 comprises providing 302 a casting mold.

The method further comprises applying 304 a marking structure 10 at an inner surface of at least one part of the casting mold using a method as illustrated with reference to Figures 1A and 1B.

The method further comprises casting 306 the spectacle lens blank using the casting mold.

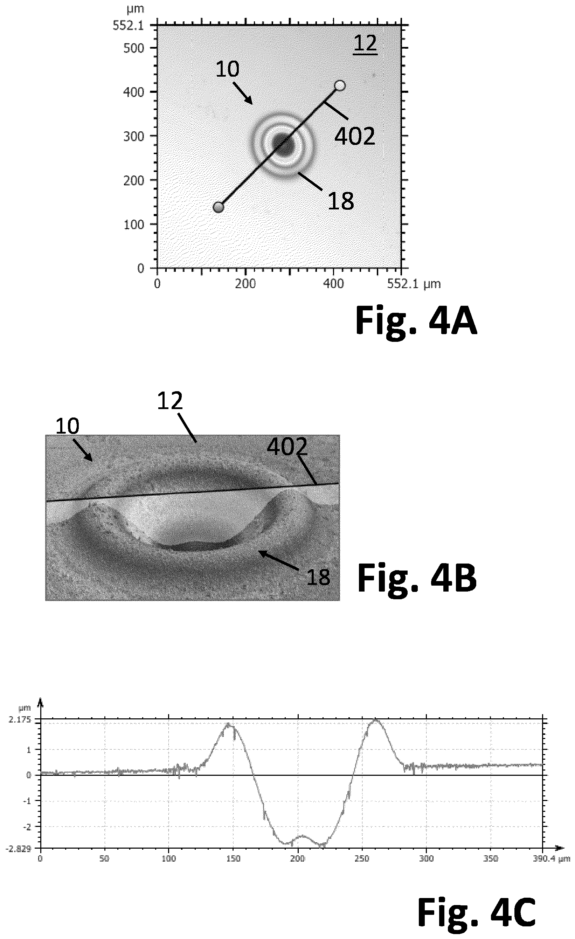

Figures 4A to 4C schematically illustrate a marking structure 10 according to an optional embodiment applied to a glass body 12 based on local, nondisruptive material displacement 18 in the glass body 12.

The lateral extension of the marking structures 10 may have a diameter of about 250 $\mu$m. A vertical extension of the central recess may be around 5 $\mu$m from the top of the surrounding wall shaped protrusion to the bottom of the central recess. The vertical height extension of the wall-shaped protrusion and the central recess with respect to the actual surface of the glass body 12 may be in a range from about +2,2 $\mu$m to about -2,8 $\mu$m.

Figure 4A shows a top view of the marking structure 10, wherein the axes of the coordinate system indicate its spatial dimensions in Micrometer. Figure 4B shows a perspective view of the marking structure 10 at the surface of the glass body. Figure 4C shows results of a measurement of the cross-sectional height profile along a cross-sectional cut indicated by the black line 402 in Figures 4A and 4B.

As can be seen, the marking structure 10 represents a modification of the surface profile of the glass body at the intended position of the marking structure, which results from a local, nondisruptive material displacement 18 in the glass body originating in the applied laser radiation. The material displacement 18 and, hence, the marking structure 10 according to the presented optional embodiment comprises a toroidal indentation in the glass body 12 surrounded by a wall-like protrusion. In the center of the toroidal recess a central protrusion may be formed representing the "hole" in the middle of the toroidal recess. In other words, the structural modification may have an appearance similar to a "donut-shape". The resulting shape of the structural modification representing the marking structure 10 achieved based on the local, nondisruptive material displacement 18 exhibits a smooth surface, in particular when compared to conventional techniques based on material ablation. In particular, microscopic cracks and/or crates may be absent in the marking structure 10, which helps preventing undesired damages in particular when using the glass body 12 carrying the marking structure 10 as a casting mold for casting optical elements, such as spectacle lens blanks. Said toroidal recess may be achieved when focusing the laser radiation 14 on the surface of the glass body 12 at the intended position of the marking structure 10.

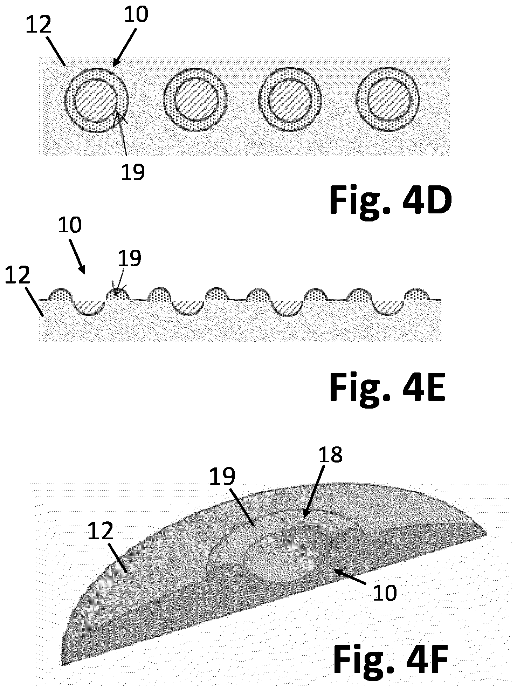

Figures 4D to 4F schematically illustrate the marking structures 10 having a smooth surface profile and smooth edges 19, wherein Figure 4D shows a schematic top view of the marking structures 10, Figure 4E a schematic cross-sectional view of the marking structures 10, and Figure 4F a schematic perspective view of a cross section through a marking structure 10. The size relations may be strongly exaggerated. As can be seen, the marking structure 10 exhibits no cracks, crates and other sharp edges which might promote the adhesion of casting material in a casting process.

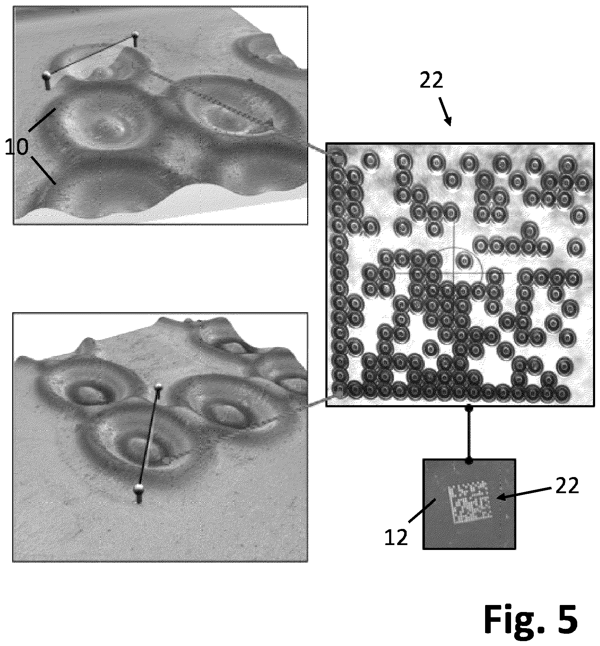

Figure 5 schematically depicts a marking element 22 formed of multiple marking structures 10 in views of different enlargement according to the embodiment shown in Figures 4A to 4C. The marking element 22 is formed by a two-dimensional arrangement of marking structures 10 creating the appearance of a two-dimensional QR code, wherein each marking structure 10 represents one pixel or dot of the QR code. For instance, the presence of a marking structure 10 at a particular pixel or position of the QR code may indicate a "1", while the absence of a marking structure 10 may indicate a "0" or vice versa. The marking element 22 may be regarded as a lattice having one pixel in each lattice position, wherein a marking structure 10 is present if the lattice position is designated having the value "1" and no marking structure 10 is present the lattice position is designated having the value "0" or vice versa. The marking element 22 may be configured to store computer readable information encoded in its arrangement of "0" and "1" values, wherein the information may be read out by means of a QR code reader.

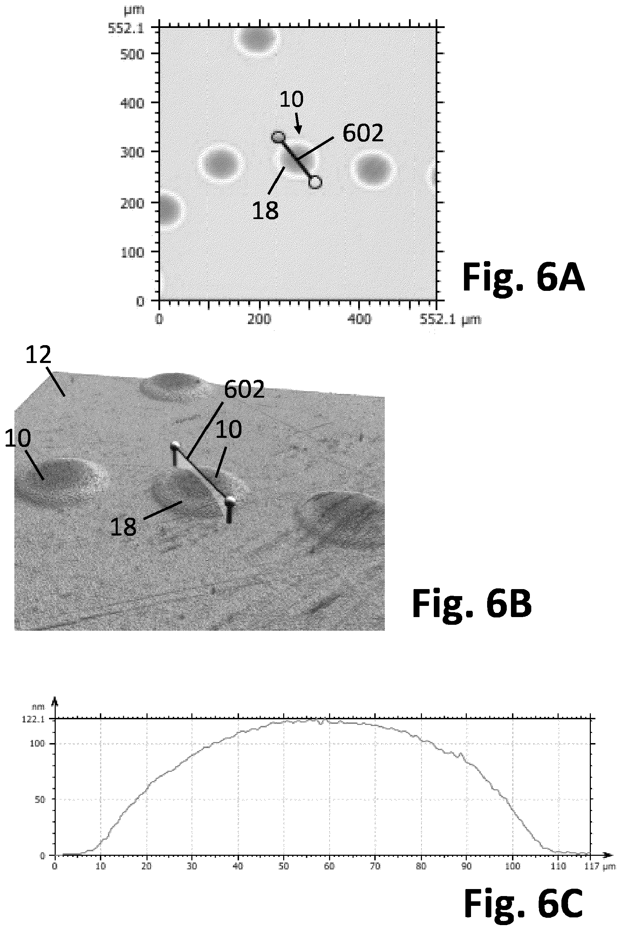

Figures 6A to 6C schematically illustrate a marking structure 10 according to a further optional embodiment applied to a glass body 12.

Figure 6A shows a top view of the marking structure 10, wherein the axes of the coordinate system indicate its spatial dimensions in Micrometer. Figure 6B shows a perspective view of the marking structure 10 at the surface of the glass body. Figure 6C shows results of a measurement of the cross-sectional height profile along a cross-sectional cut indicated by the black line 402 in Figures 6A and 6B.

The marking structures 10 shown in Figures 6A to 6C are formed by a domed protrusion having the appearance of a bump. The overall dimensions of the marking structures 10 according to this optional embodiment may be smaller than the marking structures 10 according to the optional embodiment depicted in Figures 4A to 4C.

The lateral extension of the marking structures 10 may have a diameter of about 100 $\mu$m. A vertical extension of the dome-shaped protrusions may be around 120 nm from the actual surface of the glass body 12. Hence, these marking structures 10 may be of a significantly smaller size than the marking structures 10 according to the embodiments shown in Figures 4A to 4C.

These marking structures 10 may be created by applying the laser radiation such that the surface of the glass body 12 at which the marking structure 10 shall be formed is outside the laser focus, i.e. before or after the focal plane in propagation direction of the laser radiation. This may reduce the average intensity and the peak intensity of the impinging laser radiation at the surface of the glass body and, thus, result in a formation of the marking structure.

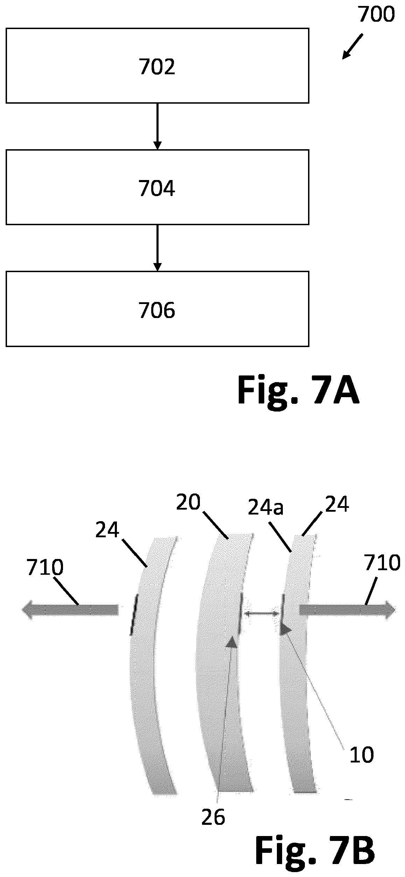

Figures 7A and 7B illustrate a method 700 according to an optional embodiment for manufacturing a spectacle lens blank 20. The method comprises providing 702 a casting mold.

The method 700 further comprises applying 704 a marking structure 10 at an inner surface of at least one part of the casting mold using a method according to the disclosure.

The method 700 further comprises casting 706 the spectacle lens blank 20 using the casting mold.

Figure 7B illustrates separating the casting mold 24 from the cast spectacle lens blank 20. The marking structure 10 applied to the inner surface 24a of the casting mold 24 prior to the casting process forms an imprint 26 in the spectacle lens blank 20 when casting the spectacle lens blank 20 using the casting mold 24. The arrows 710 illustrate the removal direction in which the parts of the casting mold 24 are removed from the spectacle lens blank 20 after completing the casting process.

**List of reference signs**

| | |
|---|---|
| 10 | marking structure |
| 12 | glass body |
| 14 | laser radiation |
| 16 | intended position of marking structure |
| 18 | laser source |
| 18a | $CO_2$ laser source |
| 18b | Excimer laser source |
| 19 | smooth edge of marking structure |
| 20 | spectacle lens blank |
| 22 | marking element |
| 24 | casting mold |
| 24a | inner surface of casting mold |

| | |
|---|---|
| 100 | method for applying a marking structure to a glass body |
| 102, 102a, 102b, 102c | method steps |

| | |
|---|---|
| 200 | Method for applying a marking element to a glass body, |
| 202 | method step |

| | |
|---|---|
| 300 | Method for manufacturing a spectacle lens blank or a semi-finished spectacle lens or a finished spectacle lens |
| 302-306 | Method steps |

| | |
|---|---|
| 402, 602 | cutting line of cross-sectional cut |

| | |
|---|---|
| 700 | method for manufacturing a spectacle lens blank |
| 702 - 706 | method steps |

**Claims**

1. Method (100) for applying a marking structure (10) to a glass body (12), the method (100) comprising:

   - applying (102) a laser radiation (14) to the glass body (12) at an intended position (16) of the marking structure (10);

   **characterized in that**
   the laser radiation (14) is applied such as to cause a local, nondisruptive material displacement (18) in the glass body (12) at the intended position (16) of the marking structure (10).

2. Method (100) according to claim 1, wherein the laser radiation (14) is applied such that an average intensity of the laser radiation (14) applied to the glass body (12) at the intended position (16) of the marking structure (10) is in a range from

$$2 \cdot 10^8 \, \frac{W}{m^2} \quad \text{to} \quad 1 \cdot 10^9 \, \frac{W}{m^2}.$$

3. Method (100) according to claim 1 or 2, wherein a peak power of the laser radiation (14) applied to the glass body (12) at the intended position (16) of the marking structure (10) is $2 \cdot 10^9 \frac{W}{m^2}$ or less.

4. Method (100) according to any one of the preceding claims, wherein the laser radiation (14) is applied in pulsed manner, wherein a pulse duration of each applied pulsed laser radiation is 800 μs or less and optionally 500 μs or less.

5. Method (100) according to any one of the preceding claims, wherein the method (100) comprises multiple repetitions (102a, 102b, 102c) of applying the laser radiation (14) to the glass body (12) at the intended position (16) of the marking structure (10).

6. Method (100) according to claim 5, wherein in one or more first repetitions (102a) the laser radiation (14) is applied with an average intensity in a range from $1 \cdot 10^8 \frac{W}{m^2}$ to $3,4 \cdot 10^8 \frac{W}{m^2}$ or less; and

   wherein in one or more second repetitions (102b) after the first repetitions (102a) the laser radiation (14) is applied with an average intensity in a range from $3,5 \cdot 10^8 \frac{W}{m^2}$ to $5,5 \cdot 10^8 \frac{W}{m^2}$ or less, and wherein the method (100) optionally further comprises one or more third repetitions (102c) in which the laser radiation (14) is applied with an average intensity in a range from $2,8 \cdot 10^8 \frac{W}{m^2}$ to $4 \cdot 10^8 \frac{W}{m^2}$ or less.

7. Method (100) according to any one of the preceding claims, wherein the applied laser radiation (14) has spectral components in at least one of the infrared spectral range and the ultraviolet spectral range.

8. Method (100) according to claim 7, wherein the infrared laser radiation is provided by a $CO_2$ laser source (18a).

9. Method (100) according to claim 7 or 8, wherein the ultraviolet laser radiation is provided by an Excimer laser source (18b).

10. Method (100) according to any one of the preceding claims, wherein the glass body (12) is at least part of or comprises one of the following elements: a spectacle lens blank (20), a semi-finished spectacle lens, a finished spectacle lens, a spectacle lens, a casting mold for casting a spectacle lens blank, and an optical element.

11. Method (200) for applying a marking element (22) to a glass body (12), the method (200) comprising applying multiple marking structures (10) using a method according to any one of the preceding claims such that the multiple marking structures (10) form at least a part of the marking element (22).

12. Method (300) for manufacturing a spectacle lens blank (20) or a semi-finished spectacle lens or a finished spectacle lens, the method (300) comprising applying one or more marking structures (10) to the spectacle lens blank (22), the semi-finished spectacle lens, or the finished spectacle lens, respectively, using a method according to any one of the claims 1 to 10.

13. Method (700) for manufacturing a spectacle lens blank (20), the method (700) comprising:

    - providing (702) a casting mold (24);
    - applying (704) a marking structure (10) at an inner surface (24a) of at least one part of the casting mold (24) using a method (100) according to any one of the claims 1 to 10; and
    - casting (706) the spectacle lens blank (20) using the casting mold (24).

14. Method (100, 200, 300, 700) according to any one of the preceding claims, wherein the glass body (12) is made of mineral glass; and
    wherein optionally a material for casting the spectacle lens blank comprises at least one of the following materials: Poly (allyl diglycol carbonate) ((P)ADC), Polythiourethan and Polyepisulfid.

15. A glass body (12) comprising:

a marking structure (10) applied on at least a part of the glass body (12) by using a method (100) according to any one of the claims 1 to 10.

Fig. 1A

Fig. 1B

200

202

100

**Fig. 2**

300

302

304

306

**Fig. 3**

**Fig. 4A**

**Fig. 4B**

**Fig. 4C**

**Fig. 4D**

**Fig. 4E**

**Fig. 4F**

**Fig. 5**

Fig. 6A

Fig. 6B

Fig. 6C

700

702

704

706

# Fig. 7A

20    24a    24
24
710    710

26
10

# Fig. 7B

# EUROPEAN SEARCH REPORT

Europäisches
Patentamt
European
Patent Office
Office européen
des brevets

**Application Number**

EP 24 18 3698

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2003/029849 A1 (TRINKS ULLA [DE] ET AL) 13 February 2003 (2003-02-13) * paragraphs [0001], [0028] - [0031], [0042], [0047], [0059]; claims 1,3,4,7 * | 1-9,11, 15 | INV. C03C23/00 G02C7/02 |
| X | US 2013/169732 A1 (WITZMANN ANDRE [DE] ET AL) 4 July 2013 (2013-07-04) * paragraphs [0002], [0009], [0017], [0047], [0048] * | 1-9,11, 15 | |
| X | US 2014/353381 A1 (STUCK ALEXANDER [CH] ET AL) 4 December 2014 (2014-12-04) * paragraphs [0002], [0047], [0051], [0061]; figure 8 * | 1,4,5, 11,15 | |
| X | US 2010/119808 A1 (LI XINGHUA [US] ET AL) 13 May 2010 (2010-05-13) * paragraphs [0001], [0006], [0011] * | 1,4,5, 11,15 | |
| X | US 6 403 919 B1 (SALAMON DAVID V [US]) 11 June 2002 (2002-06-11) * column 3, line 66 - column 4, line 11 * * column 4, line 58 - line 64 * | 1,4,5, 11,15 | **TECHNICAL FIELDS SEARCHED (IPC)** C03C G02C |
| E | WO 2024/192695 A1 (ZEISS CARL VISION INT GMBH [DE] ET AL.) 26 September 2024 (2024-09-26) * the whole document * | 1,7,8, 10-15 | |
| E | WO 2024/194412 A1 (ZEISS CARL VISION INT GMBH [DE] ET AL.) 26 September 2024 (2024-09-26) * the whole document * | 1,7,8, 10-15 | |

The present search report has been drawn up for all claims

| Place of search | Date of completion of the search | Examiner |
|---|---|---|
| Munich | 17 December 2024 | King, Ruth |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## EP 4 667 431 A1

### ANNEX TO THE EUROPEAN SEARCH REPORT
### ON EUROPEAN PATENT APPLICATION NO.

EP 24 18 3698

This annex lists the patent family members relating to the patent documents cited in the above-mentioned European search report.
The members are as contained in the European Patent Office EDP file on
The European Patent Office is in no way liable for these particulars which are merely given for the purpose of information.

17-12-2024

| Patent document cited in search report | | Publication date | Patent family member(s) | | Publication date |
|---|---|---|---|---|---|
| US 2003029849 | A1 | 13-02-2003 | DE | 10122335 C1 | 25-07-2002 |
| | | | GB | 2375325 A | 13-11-2002 |
| | | | JP | 3829301 B2 | 04-10-2006 |
| | | | JP | 2003019578 A | 21-01-2003 |
| | | | US | 2003029849 A1 | 13-02-2003 |
| US 2013169732 | A1 | 04-07-2013 | CN | 103080948 A | 01-05-2013 |
| | | | DE | 102010037273 A1 | 08-03-2012 |
| | | | EP | 2577553 A1 | 10-04-2013 |
| | | | JP | 5442168 B2 | 12-03-2014 |
| | | | JP | 2013543164 A | 28-11-2013 |
| | | | US | 2013169732 A1 | 04-07-2013 |
| | | | WO | 2012028611 A1 | 08-03-2012 |
| US 2014353381 | A1 | 04-12-2014 | EP | 2721698 A1 | 23-04-2014 |
| | | | US | 2014353381 A1 | 04-12-2014 |
| | | | WO | 2012174545 A1 | 20-12-2012 |
| US 2010119808 | A1 | 13-05-2010 | CN | 101734868 A | 16-06-2010 |
| | | | CN | 201704213 U | 12-01-2011 |
| | | | JP | 2010120844 A | 03-06-2010 |
| | | | KR | 20100052422 A | 19-05-2010 |
| | | | TW | 201028367 A | 01-08-2010 |
| | | | US | 2010119808 A1 | 13-05-2010 |
| US 6403919 | B1 | 11-06-2002 | NONE | | |
| WO 2024192695 | A1 | 26-09-2024 | WO | 2024192695 A1 | 26-09-2024 |
| | | | WO | 2024194412 A1 | 26-09-2024 |
| WO 2024194412 | A1 | 26-09-2024 | WO | 2024192695 A1 | 26-09-2024 |
| | | | WO | 2024194412 A1 | 26-09-2024 |

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 2184127 B1
- WO 9632221 A1
- WO 2015040338 A1
- EP 0601857 A1

### Non-patent literature cited in the description

- **A. STRELTSOV et al.** Laser texturing of doped borosilicate glasses. *Proc. SPIE 7584, Laser Applications in Microelectronic and Optoelectronic Manufacturing XV*, 17 February 2010, 75840S